Europäisches Patentamt

European Patent Office

Office européen des brevets

(11) Publication number: **0 619 659 A2**

# EUROPEAN PATENT APPLICATION

(21) Application number: **94104002.4**

(51) Int. Cl.5: **H04L 9/22**

(22) Date of filing: **15.03.94**

(30) Priority: **08.04.93 US 45500**

(43) Date of publication of application:
**12.10.94 Bulletin 94/41**

(84) Designated Contracting States:
**DE FR GB**

(71) Applicant: **International Business Machines Corporation**
**Old Orchard Road**
**Armonk, N.Y. 10504 (US)**

(72) Inventor: **Coppersmith, Don**
**56 Ferris Place**
**Ossining, N.Y. 10562 (US)**
Inventor: **Herzberg, Amir**
**3935 Blackstone Ave., Apt. 4A**
**Bronx, N.Y. 10471 (US)**
Inventor: **Krawczyk, Hugo Mario**
**2600 Netherland Avenue**
**Riverdale, N.Y. 10463 (US)**
Inventor: **Kutten, Shay**
**41 Lenox Street**
**Rockaway, N.J. 07866 (US)**
Inventor: **Mansour, Yishay**
**Aristobol Street 6**
**Tel-Aviv (IL)**

(74) Representative: **Schäfer, Wolfgang, Dipl.-Ing.**
**IBM Deutschland Informationssysteme GmbH**
**Patentwesen und Urheberrecht**
**D-70548 Stuttgart (DE)**

(54) **A shrinking generator for cryptosystems.**

(57) A method and apparatus for encrypting a message stream of data where a first and second stream of random data are generated with the two streams being independent of each other. A third stream is then generated from the first stream by selecting bits from the first stream only if the corresponding bit in the second stream is in a selected state. Finally, the third stream is then exclusive-OR-ed with the message stream to be encrypted to produce an encrypted stream of data.

FIG. 1

Technical Field

This invention relates to cryptosystems for providing secure data transmission. More specifically, two independent random bit streams are used to generate a third stream, which is used to encipher data.

Description of the Prior Art

Stream cipher cryptosystems are one of the most commonly used methods of encryption, specially suitable for on-line encryption of data transmitted at high speeds. Such a cryptosystem consists of a device called the pseudo random generator (or pad generator), which generates a sequence of bits out of an initial input. The generated sequence is called the pad, and the initial input the seed. Given a message M, a pad P of same length as M is generated, and then, each bit of M is encrypted by XOR-ing it with a corresponding bit of P. In other words, if $M_0$, $M_1$, ..., $M_k$ are the message bits and $P_0$, $P_1$, ..., $P_k$ the pad bits, then the cipher text consists of the bits $M_0 \oplus P_0$, $M_1 \oplus P_1$, ..., $Mk \oplus P_k$, where $\oplus$ denotes the XOR (or exclusive-or) bit operation. Decryption is the very same operation. Given the cipher text, the plain text is recovered by XOR-ing the cipher text with the same pad bits that are used for the encryption.

In order to use the same pad bits, the encryptor and decryptor share the initial seed used to generate the pad. They also have identical generators and thus can generate the same pad. Therefore, the heart of the system is the pad generator, and the cryptographic strength of the cryptosystem depends on the quality of the pad bits.

If the pad were truly random rather than generated by a pseudorandom generator, the encryption as described above would be perfect (i.e., leaked no information on the encrypted message). Thus, a good generator is one that generates pads that "look" random. Hence, it is called a pseudorandom generator. The basic pseudorandom property required from the pad sequence for encryption is that the sequence be unpredictable. This means that an adversary having access to a portion of the pad cannot reconstruct by himself other unknown portions of the pad.

A shift register is a register that can repeatedly perform the following operation: input a bit to be its less significant bit, output its most significant bit, and shift every other bit to the next most significant location. In a Linear Feedback Shift Register (LFSR) the new input bit is the result of a XOR operation of the bits in some locations in the shift register. The register connections are the locations of the bits in the LFSR selected to be XOR-ed. For preventing construction of a complete pad from a portion of the pad, sequences produced by LFSR's are very weak. Because of their linearity, from a short portion of the pad (twice the length of the seed), it is possible to discover the whole register structure and seeds and, therefore, to generate the entire pad. On the other hand, these sequences have other very desirable properties of random sequences. The have long periods, which help prevent different messages from being encrypted using identical portions of the pad, balanced distribution of bits and other patterns, which prevents e.g., the case where a large majority of the bits in the original message remain the same after encryption, and small autocorrelation between their bits. For these reasons, LFSR's are sometimes used as basic modules for the construction of pseudorandom generators.

A paper by D. Gollmann and W. G. Chambers, "Clock-Controlled Shift Registers: A Review", IEEE J. Selected Areas Commun., vol. 7, pp. 525-533, May 1989, discusses pseudorandom generators that use two LFSRs. In these constructions the output of the first LFSR is used to control the clock of the second LFSR. In this way the output from the second LFSR depends on the first one. It is this output which is used as a pseudorandom stream. Depending on the way the second LFSR is clocked, the resulting pseudorandom stream can repeat bits from the first LFSR sequence or skip some of these bits.

US Patent 4,852,023 to Lee et al discloses a nonlinear random sequence generator which uses three pairs of registers with one register in each pair being nonlinear. With this invention, in every pulse a bit of one of two pairs of sequences is outputted, and there is no omission of bits from the sequence. Hence, a would be attacker would know that in the i-th pulse that the outputted bit is the i-th bit from one of the registers of the sequence generator.

US Patent 5,001,754 to K. S. Deffeyes discloses a method of encrypting data which employs a key and a memory array adapted to operate on a NxM pixel display. With this invention, there is no omission of output bits.

US Patent 5,003,597 to Merkle discloses an encryption/decryption process where data is encrypted in blocks rather than bit by bit as with the applicants invention. Further, this patent does not teach the omission of bits from output generator.

US Patent 4,817,145 to Gunther discloses a method in which the output of one pseudo random generator is used to clock two other pseudo random generators. The output of the latter is combined to produce the ciphering sequence. Therefore, at least three pseudo random streams are to be combined. No selection state or omission of values is disclosed.

US Patent 4,341,925 discloses the use of two pseudo random sequences which are bitwise XOR-ed to produce a scrambling pad to be XOR-ed with data. No selection or omission of bits is performed.

US Patent 4,179,663 to Vasseur discloses a method for generating a random sequence wherein every pulse of a bit of one of two pseudo random generators is outputted. With the use of the Vasseur patent, a would be attacker may not know from which register a bit came from, but the attacker would know that in the i-th pulse that the outputted bit is the i-th bit.

US Patent 5,031,129 to Powell et al discloses the use of a parallel pseudorandom generator which operates upon a feedback arrangement wherein the next value of the pseudo generator is equal to the exclusive-OR (XOR) combination of previous outputs of the serial pseudo random generator.

Therefore, a need exists for a high quality pad generator based on LFSR's which has the requisite randomness properties and at the same time eludes attacks based on linearity of sequences.

Summary of the Invention

It is an object of this invention to provide a secure cryptographic system using LFSR's.

It is another object of this invention to provide a secure cryptographic system which is easily implemented and supports high transmission rates (megabits per second).

This invention discloses a method and apparatus for encrypting a message stream of data. With this invention two independent streams (hereinafter referred to as first and second streams respectively) are generated, and a third stream is then generated from the first stream by selecting bits from the first stream only if a corresponding bit in the second stream is in a selected state. The third stream is then exclusive-OR-ed with a message stream to be encrypted.

The first and second streams of data can be generated using standard LFSR's, thereby providing a secure encryption system which is easily implemented.

Brief Description of the Drawings

FIG. 1 is a schematic illustration of a specific application of the invention.

FIG. 2 is a schematic illustration of the shrinking generator.

FIG. 3 schematically illustrates the operation of the control and the linear shift registers of the shrinking generator.

Description of the Preferred Embodiment

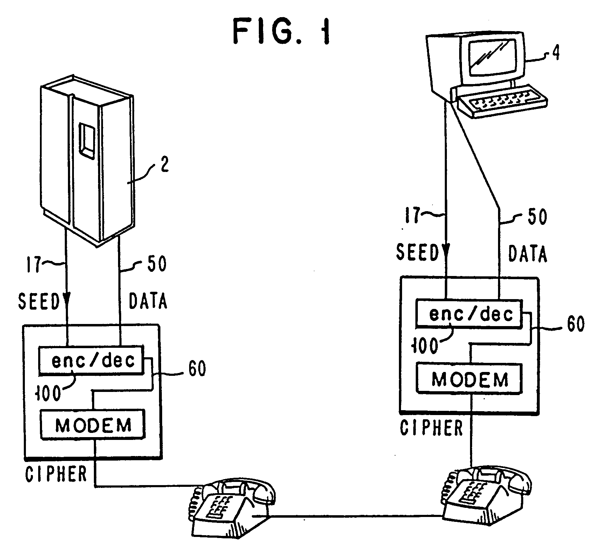

Shown in FIG. 1 is an example of an application of the invention to provide secure communication between server computer 2 and PC terminal 4. Shown is an encryption/decryption device 100 (shrinking generator) at the server and at the terminal ends. The data to be transmitted 50 and a seed or secret key on lines 17 are supplied to the encryption/decryption device to generate a cipher stream on line 60, which is transmitted between the server and terminal.

Throughout the current application, references will be made to various streams of data. The reference numerals point to the lines on which these various streams will appear. The selection of the seed and the manner in which the PC terminal and the server get to know the same seed is well known in the art. See Steiner, J. G., et al, "Kerbaros: An Authentication Server Open Network Systems." Proceedings of USENIX Conference, Winter 1988. The shrinking generator 100 at the PC end encrypts information sent from the PC to the server with one key, while the shrinking generator 100 at the server end encrypts data to be sent from the server to the PC with a different seed.

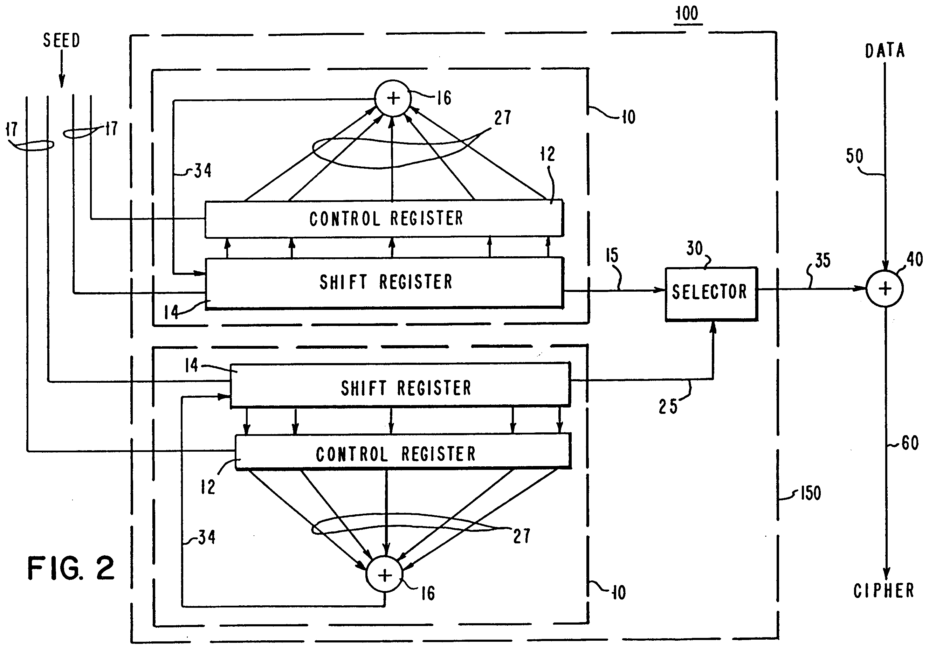

Referring to FIG. 2, the encryption device 100 has a generator 150 of pseudorandom bits whose output stream on line 35 is bitwise exclusive-or-ed by exclusive-or circuit 40 with the data stream on line 50 to produce the encrypted information stream on line 60. The generator 150 of pseudorandom bits is called the pseudorandom generator, and its output on line 35 is called the pseudorandom stream. The decryption operation, namely, the recovery of data out of the encrypted information is very similar. The plain information 50 is recovered by XORing the encrypted data stream on line 60 with the same pseudorandom stream on line 35 used for the encryption of that information. The pseudorandom stream generated by the pseudorandom generator depends on a secret key(s), or seed(s) on lines 17, known to both transmitter (encryptor) and receiver (decryptor) of the information. Each seed determines a unique sequence produced by the generator. When the two parties use the same seed on lines 17, and feed it into the pseudorandom generator 150, the output stream on line 35 is the same, and the encryption/decryption operation is consistent.

Again referring to FIG. 2, the pseudorandom generator 150 comprises two subgenerators 10 outputting two streams of data on lines 15 and 25. The output stream on line 35 from the pseudorandom generator 150 consists of a substream of bits from the first stream on line 15. Bits from the first stream on line 15 are included or omitted from pseudorandom stream on line 35 depending on whether or not the corresponding bit in the second stream on line 25 from subgenerator 10 is in a selected state. The definition of selected state is given by selecting component 30. In a typical implementation, the selected state can be bit on line 25 that is a '1'. Those bits from the stream on line 25 that are '0' determine the omission of the corresponding bits from the first stream on line 15. This case can be formalized in the following way. Let $a_1$, $a_2$, ..., denote the consecutive bits output by a subgenerator 10 on line 15, and let $s_1$, $s_2$, ..., denote the consecutive bits output by a subgenerator 10 on line 25. For any i the bit $a_i$ is output by the pseudorandom generator 150 only if $s_i$ is '1', otherwise, $a_i$ is omitted. Denoting by $p_1$, $p_2$, ..., the consecutive bits from the pseudorandom generator 150 (i.e., stream on line 35), we have

$$p_k = a_{i_k}$$

where $i_k$ is the position of the k-th '1' bit in the stream on line 25. Below is a specific example of the stream P on line 35 generated out of a given sequence A on line 15 and a given sequence S on line 25.

```
A:110100100001010111011000111110011010010000010101110110001111100110100010
    | ||   |    |||| | ||   |    |||| | ||   |    |||| | ||   |    |||| | ||   |
S:010110010000111101011001000011110101100100001111010110010000111101011000100


P:110010101010111010110101110011110100
```

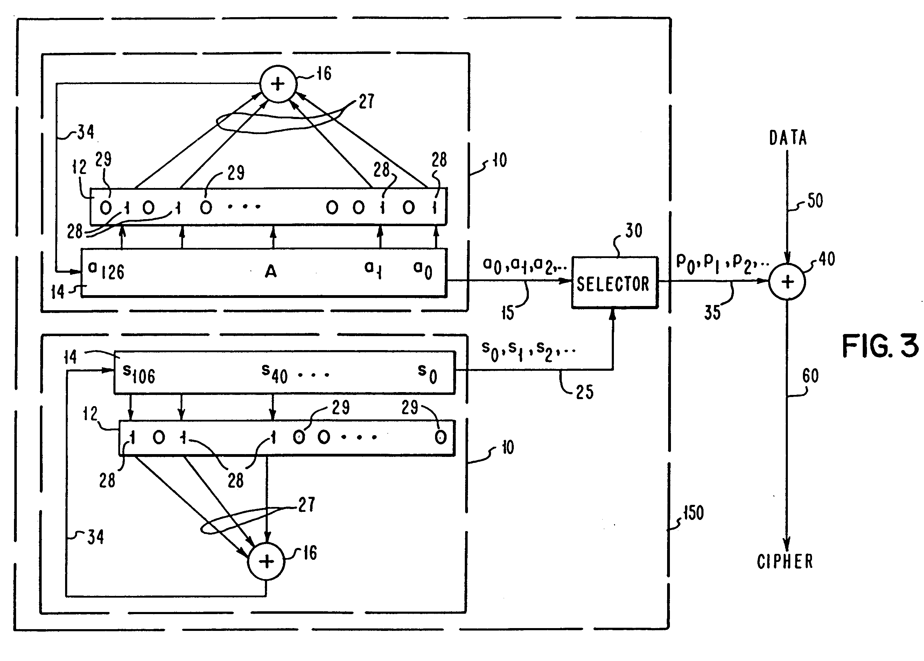

Referring now to FIG. 3, the preferred embodiment for the subgenerators 10 is given by implementing them as Linear Feedback Shift Registers (LFSR). These are very well known devices (See e.g., S.W. Golomb, Shift Register Sequences, San Francisco: Holden Day, 1967). Each of the LFSR's 10 has a shift register 14 and possibly, a programmable control register 12. FIG. 3 shows examples of LFSR's inside the subgenerators 10. Shift register 14, which is driven by a logical clock, can repeatedly perform the following operation: input a bit to be its least significant bit (e.g. $a_{126}$) output its most significant bit ($a_0$), and shift every other bit to the next more significant location. In an LFSR the new input bit (called the feedback) is the result of an XOR (exclusive-OR) operation by exclusive-OR gate 16 of the bits in selected locations in the shift register 12 (because of limitations in the fan-in of logic gates the XOR gate 16 is usually implemented as a XOR-tree). Therefore, after loading the shift register 14 with an initial sequence of bits of the same length as the register itself (called the seed), we get in each clock pulse a new bit on output 15 by the LFSR 14, and a new feedback bit is shifted into it from line 34. In this way the number of bits output by the LFSR is unlimited. Those locations 28 of the LFSR connected to the feedback XOR by lines 27 (called the connections) can be fixed or, alternatively, determined by the contents of a control register 12 associated with the shift register 14. In the latter case of determining the connections via the control register, this control register 12 can be programmed to provide a variable configuration of the locations from the shift register connected to the feedback XOR gate 16 via connections 27. In this latter case, a location of the control register programmed to contain the value '1' (28) means that the corresponding location in the shift register 14 is connected to the XOR gate 16, while locations programmed to '0' (29) mean no connection from that location in the shift register 14 to the feedback XOR 16. To achieve this determination of the connections via the control register, a very simple logic is necessary between the shift register 14 and the control register 12. Namely, for each location i, the bit i in the shift register and the bit i in the control register are connected to an AND gate, and the result of this gate is input into the XOR 16. Therefore, one AND gate per each location is required in the registers.

In case of a very constrained hardware implementation, fixed connections 27 to the X-OR gates 16 can reduce the hardware cost over variable connections. However, in general, variable connections to the XOR gate with a programmable control register is recommended. Variable connections (whose contents are

4

known only to the communicating parties) significantly add to the difficulty of breaking the resultant encryption system. Variable connections permit the periodic update of these values, and prevent the use of cryptographic weak connections during too long periods. Also, variable connections allow the security of the whole device to be tuned up and down through the programming of the control registers without need of hardware changes. Indeed, the virtual length of the registers (a major parameter for the determination of the cryptographic strength of the system) can be adjusted by the number of significant bits loaded into the control register. For example, a physical control register of length 107 in which 66 zeros are loaded into its most significant bits produces an LFSR of virtual length 41. (See bottom of FIG. 3). This feature is very useful when systems of different cryptographic strength are implemented using the same hardware. Such a situation arises, for example, when the system is sold in different countries each of them having different import/export regulations for the allowed strength of the encryption system. The tuning of the actual strength can be done in software by programming the control register.

The output of an LFSR is completely determined by the initial contents of the shift register 14 and by the locations of bits connected to the XOR gate 16. In the case of fixed connections, only these initial contents (the seed) form part of the secret key loaded into the shift register and shared by the communicating parties (for a consistent encryption/decryption operation). If the connections are variable and kept secret, then the description of these connections, i.e., the contents of the control registers 12, are also part of the shared secret key, and they are loaded into the control registers. The initial contents for the shift registers are to be chosen as random bit strings of the length of the LFSR. The values for the control register are chosen as a stream of bits of the same length as the LFSR, but the space of recommended values (for a good security strength) is limited to strings corresponding to the so called primitive polynomials over the field of two elements. This fact is well known in the literature and is covered in many books and articles (See e.g., S.W. Golomb, Shift Register Sequences, San Francisco: Holden Day, 1967). We recommend also that the lengths of the LFSRs in the two subgenerators 10 be coprime integer numbers, namely, numbers that have no common divisors greater than 1. For example, the length of one LFSR might be 127 and the other 107. This is required in order to guarantee a good period and non-linearity of the generated streams.

While use of Linear Feedback Shift Registers is preferred, the first and second data streams could be generated using any pseudorandom generator such as, for example, a Linear Congruential Generator could be used. See D. Knuth, The Art of Computer Programming, Vol. 2, 1981.

**Claims**

1. A method of encrypting a message stream of data, comprising the steps of:

    a. generating a first and second stream of random data with said second stream of data being independent of said first stream of data;

    b. generating a third stream of random data by selecting bits from said first stream of data, each bit of said first stream being selected for said third stream only if a corresponding bit in said second stream of data is in a selected state; and

    c. exclusive-OR-ing each bit of said message stream of data with a corresponding bit of said third stream to produce an encrypted stream of data.

2. A method of encrypting a message stream of data, comprising the steps of:

    a. generating a first and second stream of random data with said second stream of data being independent of said first stream of data;

    b. generating a third stream of random data by selecting bits from said first stream of data, wherein each bit in a given sequential order in said first stream is selected for said third stream only if a bit in said given sequential order of said second stream is in a particular state; and

    c. exclusive-OR-ing each bit of said message stream of data with a corresponding bit of said third stream to produce an encrypted stream of data.

3. An apparatus for encrypting a message stream of data, comprising:

    a. means for generating a first and second stream of random data with said second stream of data being independent of said first stream of data;

    b. means for generating a third stream of random data where bits are selected from said first stream of data only if a corresponding bit in said second stream of data is in a selected state; and

    c. a logic circuit for exclusive-OR-ing each bit of said message stream of data with a corresponding bit of said third stream to produce an encrypted stream of data.

4. An apparatus as recited in claim 3, wherein said means for generating said first and said second stream of data comprises a pair of linear feedback shift registers, each of said linear feedback shift registers having a control register and a shift register, with the control register selecting bits from said shift register for generation of feedback bits, with the output of said linear feedback shift registers being said first and said second streams of random data.

5. An apparatus as recited in claim 3 or 4, wherein said means for generating said third stream of data comprises a logic circuit for selecting which bits from said first stream are included in said third stream.

6. An apparatus for generating a highly random stream of data, comprising:

    means for generating a first and second stream of random data with said second stream of data being independent of said first stream of data; and

    means for generating a third stream of data, with each bit of said first steam being selected for said third stream only if a corresponding bit in said second stream of data is in a selected state, where said third stream of data is a highly random stream of data.

7. A method of generating a highly random stream of data, comprising:

    generating a first and second stream of random data with said second stream of data being independent of said first stream of data; and

    generating a third stream of data, with each bit of said first stream being selected for said third stream only if a corresponding bit in said second stream of data is in a selected state, where said third stream of data is a highly random stream of data.

FIG. 1

FIG. 2

8

**FIG. 3**

DATA 50

+ 40

CIPHER 60

$P_0, P_1, P_2, \ldots$ 35

SELECTOR 30

150

$a_0, a_1, a_2, \ldots$ 15

$s_0, s_1, s_2, \ldots$ 25

10

28 27 16

$a_0$ $a_1$ A $a_{126}$

28 29 12 29 34

+ 16

$s_0$ $s_{40} \ldots$ $s_{106}$

29 29

10

1 0 0 1 0 1

27 28 16

12 28 34

14

9